Europäisches Patentamt

European Patent Office

Office européen des brevets

(11) Publication number: **0 132 317 B1**

# EUROPEAN PATENT SPECIFICATION

(45) Date of publication of patent specification: **07.04.93**  (51) Int. Cl.5: **C08L 27/06**

(21) Application number: **84304347.2**

(22) Date of filing: **27.06.84**

(54) **The use of dispersing aids in processing aid compositions for vinyl chloride polymer, the production of said compositions and vinyl chloride compositions containing them.**

(30) Priority: **28.06.83 GB 8317499**

(43) Date of publication of application:
**30.01.85 Bulletin 85/05**

(45) Publication of the grant of the patent:
**07.04.93 Bulletin 93/14**

(84) Designated Contracting States:
**AT BE CH DE FR GB IT LI LU NL SE**

(56) References cited:
**EP-A- 0 037 686**

(73) Proprietor: **ROHM AND HAAS COMPANY**
**Independence Mall West**
**Philadelphia Pennsylvania 19105(US)**

(72) Inventor: **Rabinovic, Ismail Samy**
**5 Ave Victor Hugo Domaine Du Grand Duc**
**F-06210 Mandelieu(FR)**
Inventor: **Thomann, Hubert**
**Buchenstrasse 10**
**W-6230 Frankfurt 80(DE)**
Inventor: **Guth, Gerard**
**26 Rue De La Chapelle**
**F-67630 Lauterbourg(FR)**
Inventor: **Carter, William Earl**
**Hillside 18 Broad Highway**
**Cobham Surrey(GB)**

(74) Representative: **Angell, David Whilton et al**
**ROHM AND HAAS (UK) LTD. European Oper-**
**ations Patent Department Lennig House 2**
**Mason's Avenue**
**Croydon CR9 3NB (GB)**

Rank Xerox (UK) Business Services
(3.10/3.5x/3.0.1)

## Description

This invention is concerned with the use of dispersing aids in processing aid compositions for vinyl chloride polymer, the production of said compositions and vinyl chloride compositions containing them.

Polymeric processing aids are widely used in the production of poly(vinyl chloride) articles, in order to improve the processing performance during extrusion, injection and/or thermoforming. The importance of dispersing the processing aids well through the vinyl chloride polymer is known. Improvements in dispersion of such processing aids in poly(vinyl chloride) have been achieved by the use of high friction conditions or temperature variation during processing. Also, it is known that lumps of processing aid polymer particles which do not break down during processing can form gels in the final product and these are visible and detract from optimum processability.

In spite of the wide recognition of this dispersion problem, no adequate generally usable solution has been available. We have now found certain dispersion aid compositions which, when used to modify the processing aids, have a reduced tendency to form gel colonies and so have desirable dispersability properties. In its broadest aspect this invention therefore is directed to this use.

Processing aid compositions of this invention preferably comprise blends of (a) copolymer(s) of methyl methacrylate with less than 50% by weight of ($C_1$-$C_4$)- alkyl acrylate(s) and (b) homopolymer(s) or copolymer(s) containing at least 50% by weight of one or more of the monomers:

($C_1$ to $C_8$-alkyl) acrylates, ($C_6$ to $C_9$)-cycloalkyl acrylates, ethylene, propylene, vinyl acetate, butadiene; in a weight ratio (a): (b) of 99.5:0.5 to 90:10 preferably 99:1 to 95:5.

Consequently the invention also provides compositions comprising vinyl chloride polymer containing the processing aid compositions of the invention and processes for making the processing aid compositions by intimately mixing components (a) and (b) in the indicated weight ratios.

The processing aid polymers (a) which are used in this invention may be single stage polymers, or, multiple stage polymers, and the Examples or such processing aids are more fully described in British Patents 1 511 683, 981 116 and U.S. Patent 3 833 686.

The component (b), is preferably at least one of the following polymers:

poly (butyl acrylate), poly (ethyl acrylate), polybutadiene, poly(ethyl acrylate/styrene), poly(butyl acrylate/styrene), poly(butyl acrylate/methyl methacrylate), poly(ethyl acrylate/butyl methacrylate), poly-(butadiene/styrene), poly(butyl acrylate/styrene/methylmethacrylate) with the proviso that the methacrylate and/or styrene content is less than 50% by weight in each case. Other examples are poly(vinyl acetate) and poly(ethylene/vinyl acetate).

The molecular weight range of suitable dispersing aids is wide, for example 15,000 to 100,000 weight average, but depends on the particular polymer used. For example, with poly (butyl acrylate), poly (ethyl acrylate), and poly (butyl acrylate/styrene), a preferred molecular weight range is as stated above. The dispersing aid may even be cross-linked and/or graft linked preferably to a maximum content of 5% by weight crosslinker or graft-linker units. A dispersability rating test for indicating the suitability of a particular polymer for use as a dispersing aid is given later in this specification.

The dispersing aid is intimately blended with the processing aid polymer to form the compositions of the invention. Any method of making a very thorough, intimate mixture of the dispersing aid and usually powder processing aid polymer is suitable. However simple admixture of processing aid powder and dispersing aid will usually be insufficient unless intimate, thorough mixing is achieved. Another method of forming the compositions of the invention is to emulsion polymerise the dispersing aids in the presence of the latex of the processing aid polymer formed by emulsion polymerisation. Our presently preferred method is to separately prepare emulsions of processing aid polymer and dispersing aid, mix the emulsions, and then coisolate the two polymers by spray drying or coagulation. Spray drying is described in detail in Spray Drying, An Introduction to Principles, Operational Practices, and Applications, K. Masters, CRC Press, Cleveland, Ohio (1972). Coagulation comprises salting out the stabilizing surface active agent from the emulsion by slowly adding the polymer emulsion for example twice its volume of electrolyte solution containing any one or more of a number of salts and/or acids such as NaCl, KCl, $CaCl_2$, $Na_2SO_4$, $M_gSO_4$, acetic acid, oxalic acid, HCl, $HNO_3$, $H_2SO_4$ and $H_3PO_4$.

The polymer may then be separated by filtration and washed several times with fresh water to remove excess electrolyte, and then dried.

The processing aid and dispersing aid can also be isolated from the emulsion by evaporation or freeze drying. When following the preferred method, it is important that the two emulsions be compatible. For instance, the soaps should be similar or the same, i.e., of the same ionic species and of similar water solubility or HLB (hydrophile/lipophile balance).

The dispersing aid is generally a single stage polymer but it may be a multiple stage polymer in which case the overall monomer composition and the outermost (shell) stage must both conform to the composition parameters specified above even if some of the early (inner) stages, for example the core, do not. The dispersing aid may intentionally be separately prepared as distinct particles and then blended with the processing aid polymer. The dispersing aid polymer is not to be confused with any ungrafted polymer which unintentionally forms during preparation of multiple stage processing aid polymers, since such unintentional polymer does not function to reduce gel formation and is thus not within the scope of this invention.

The most preferred weight ratio of processing aid polymer to dispersing aid in the compositions of the invention is 98/2 to about 96/4, and the optimum weight ratio is about 97/3.

The vinyl chloride polymers which may be modified using the compositions of the invention include polymers and copolymers of vinyl chloride containing at most 50% by weight of other monomer units, for example vinyl acetate, ethyl vinyl acetate.

The weight ratio of vinyl chloride polymer to processing aid composition may be the same as used with conventional processing aids. Normally this ratio is 90:10 to 99;5:0.5 more usually 95:5 to 99:1 by weight.

Other standard additives may be used to make up the formulation of the vinyl chloride polymer composition. For example, impact modifiers, colorants, pigments, plasticizers, stabilizers, and lubricants may be included.

After formulating by standard techniques, the formulation may be melt processed, also by standard techniques, to form a substantially gel-free compound in which the processing aid is extremely well dispersed.

Some preferred embodiments of the invention are given in the following Examples. As comparative tests there are also given details of the performance of conventional processing aids and details of tests in which the candidate as dispersing aid fails the dispersability rating test previously mentioned and detailed below. All parts and percentages are by weight unless otherwise indicated.

Candidate dispersing aid polymers of varying compositions are prepared in emulsion using the following ingredients and procedure.

| Charges: | | Parts: |
|---|---|---|
| A -<br>B - | DI water @ pH 1 10 using NaOH<br>sodium stearate (or SLS) | 397.5<br>0.26 |
| BI - | sodium stearate (or SLS) monomer (s) | 1.49<br>212.6 |
| C - | t-dodecyl mercaptan as mercaptan chain transfer agent or BDA as difunctional monomer | Varied |
| D - | KPS initiator water | 1.1<br>63.3 |
| Theory Solids   32.4% | | |

Procedure

Charge the water (A) to a one litre four-neck flask fitted with a stirrer, thermometer, nitrogen inlet and a condenser. The water is heated to 65°C while sweeping with nitrogen. At 65°C the first emulsifier charge (B) is added and allowed to stir for 10 minutes. The KPS initiator (D) is added followed by 15% of the monomer(s) (C) and the temperatures maintained at 65°C until an exotherm is observed.

At this point the second emulsifier charge (BI) is added followed by the gradual addition of the balance of the monomers (C) over a one hour period. After completion of the monomer feed, the batch is maintained at 65°C for 15 minutes then cooled to room temperature.

A PVC masterbatch formulation, without dispersing aid, of the following ingredients

| PVC (K-58) Resin | 100 Parts |
|---|---|
| Sulfur containing organic tin stabilizer | 2.0 Parts |
| Stearic Acid | 1.0 Part |
| Plasticizer-DOP | 5.0 Parts |
| Lubricating-Processing Aid "Paraloid" K-175 | 3.0 Parts |

is prepared in a high intensity Prodex-Henschel blender. The subject processing aid composition powders are added (at 108g masterbatch + 2g processing aid) to samples of the masterbatch and the powder is again mixed homogenously to form the final compound.

The powder compound is milled on a two-roll Schwabenthan Mill having two chrome polished rolls. The dimensions of the rolls are 35 cms length (30 cms working length) and 15 cms diameter The two-roll mill is run at a temperature of 190°C and a speed of 26/30 rpm (front/rear rolls). Once the film has formed on the front roll and after the standard practice of obtaining a homogenous film, the mill is stopped and a horizontal strip, approximately 4 - 5 cms wide, is cut at the full length of the roll, taken from the roll and stretched immediately to twice its length using a guide of the appropriate length. The strip is held in the stretched position until cool.

The milled-stretched strips from each compound are rated for the amount of undispersed processing aid particles. This is done by comparing gel colonies with reference standards using a rating system of 0 to 100 units, with 0 being equal to a strip having no undispersed particles and 100 being equal to a strip having a large number of undispersed particles. A dispersibility rating of between 40 and 50 units is termed as very good, whereas anything above 65 - 70 units has an unacceptable number of undispersed gels.

In each series of dispersion evaluations, at least one sample of PVC containing a processing aid without a dispersion aid additive is run as a control.

In order to determine whether a given candidate dispersing aid should be regarded as effective to substantially reduce gel colonies of processing aid in rigid thermoplastic matrix polymer formulations, and is therefore within the scope of this invention, the maximum amount of dispersing aid, (a) to (b) ratio of 98:2, is compared with the control and a reduction of at least 30 units is required. Preferred dispersing aids give a reduction of 45 units and most preferred a reduction of 50 units, ideally 60 units when compared to a processing aid in rigid thermoplastic giving a dispersion rating of 100 (worst).

In the following Examples, the following abbreviations are used:

| Methyl methacrylate | = MMA |
|---|---|
| Butyl methacrylate | = BMA |
| Styrene | = St |
| Methyl acrylate | = MA |
| Ethyl acrylate | = EA |
| Butyl acrylate | = BA |
| Butadiene | = Bd |

Unless otherwise indicated, all of the candidate dispersing aids in the Examples pass the test set out above.

EXAMPLES 1 TO 8

In these Examples, reported in Table I, various low molecular weight dispersion aids are prepared in emulsion using 4% t-DDM in the above described procedure. The molecular weights of the dispersion aids ranged from 19,000 to 38,000, depending on monomer used. The emulsion is mixed with an emulsion of a methyl methacrylate-ethylacrylate polymer. The improved processing aids containing the dispersion aids were isolated by spray drying. The dispersion aid is incorporated at a concentration of 3% based on processing aid composition. The ratio of improved processing aid composition (a) and (b) to PVC is 2 to 100. A control is run without the dispersing aid (Example 8).

TABLE I

| EXAMPLE | DISPERSING AID POLYMER (b) OF | DISPERSION RATING 3% based on PVC | |
|---|---|---|---|
| | | RATING | % CHANGE |
| | | | (relative to control 100 units) |
| 1 | (MMA) (Comparative) | 90 | 10 |
| 2 | (EA) | 65 | 35 |
| 3 | (St) (Comparative) | 85 | 15 |
| 4 | (BA) | 55 | 45 |
| 5 | BA/St : 55/45 | 40 | 60 |
| 6 | MMA/EA : 90/10 (Comparative) | 75 | 25 |
| 7 | Bd/St : 70/30 | 60 | 40 |
| 8 | Processing Aid Control (Comparative) | 100 | - |

EXAMPLES 9 TO 13

In these Examples, the relationship between polymer compositions and molecular weight is explored. A series of low and high molecular weight dispersing aids was prepared by using 4% and 0% t-dodecyl mercaptan chain transfer agent respectively. The molecular weights of the low molecular weight dispersion aids ranged from 19,000 to 38,000, whereas the high molecular weight dispersion aids ranged from 137,000 to 3,890,000. Dispersion data was obtained in the procedure of the previous Examples and are presented in Table II.

Poly-BA and Poly-EA are effective dispersing aids over the range of molecular weights studied. The effectiveness of the dispersing aids seems to diminish very slightly with decreasing molecular weight but not to the point that they are no longer regarded as effective dispersing aids. Similarly, Poly-MMA, Poly-St do not appear to be effective dispersing aids for processing aids at high or low molecular weights.

TABLE II

| EFFECT OF DISPERSING AID MOLECULAR WEIGHT ON THE DISPERSION OF THE PROCESSING AID MODIFIER IN PVC | | | | | |
|---|---|---|---|---|---|
| EXAMPLE | POLYMER COMPOSITION | 4% t-DDM | | No RSH | |
| | | 3% ADDITIVE ON MODIFIER | | | |
| | | RATING | % CHANGE | RATING | % CHANGE |
| 9 | (MMA) (Comparative) | 90 | 10 | 95 | 5 |
| 10 | (EA) | 65 | 35 | 50 | 50 |
| 11 | (St) (Comparative) | 85 | 15 | 90 | 10 |
| 12 | (BA) | 55 | 45 | 50 | 50 |
| 13 | Processing Aid Control (Comparative) | 100 | - | 100 | - |

EXAMPLES 14 TO 19

The dispersing aids from Examples 2 and 5 were examined for the effect of the additive level on the dispersion of the processing aid in PVC.

The sample evaluated in Example 14 showed 44% improvement (compared to Example 15 control) in processing aid dispersion at only 1.5% additive level which is equivalent to only 0.15% on total PVC. In

5

other words it is equivalent to only 0.15% of dispersing aid (a) for every one part of processing aid (b) added to 100 parts of PVC e.g. if 3 phr of (b) is added this will equal 0.45% of dispersing aid (a) for 100 parts of PVC. The results are reported in Table III.

The samples evaluated in Examples 17 and 18 show improvement in processing aid dispersion at 2.5% to 5.0% additive level even when mixed with a processing aid (Example 19) which has unacceptably high dispersion rating, being above 100. The dispersing aid is mixed with the processing aid (in emulsion form) in every case in Table III except Example 15 (control) which is a processing aid without any dispersing aid. Example 16 shows the addition of p-MMA as a dispersing aid mixed in emulsion form to a processing aid.

TABLE III

EFFECT OF ADDITIVE LEVEL ON THE
DISPERSION OF THE PROCESSING AID IN PVC

| EXAMPLE | DISPERSING AID COMPOSITION | DISPERSION RATING | | | |
| --- | --- | --- | --- | --- | --- |
| | | ADD. AT 1.5%[1] | | ADD. AT 3%[1] | |
| | | RATING | % CHANGE[2] | RATING | % CHANGE[2] |
| 14 | Ba/St | 50 | 44.0 | 40 | 56 |
| 15 | Processing Aid Control (Comparative | 90 | – | 90 | – |
| 16 | MMA (Comparative) | 90 | – | 90 | – |

| | | ADD. AT 2.5%[1] | | ADD. AT 5%[1] | |
| --- | --- | --- | --- | --- | --- |
| | | RATING | % CHANGE[2] | RATING | % CHANGE[2] |
| 17 | (EA) | 85 | 15 | 55 | 45 |
| 18 | (Ba/St) | 90 | 10 | 65 | 35 |
| 19 | Processing Aid Control (Comparative) | >100 | – | >100 | – |

FOOT NOTES

[1] the percentages refer to the addition of the dispersing aid to the processing aid,

[2] the percentage change is always compared to the control i.e. Examples 15 or 19.

**Claims**

1. The use of at least one homopolymer and/or copolymer containing at least 50% by weight of units of one or more of the following monomers: $(C_1-C_8)$-alkyl acrylates, $(C_1-C_9)$-cycloalkyl acrylates, ethylene,

EP 0 132 317 B1

propylene, vinyl acetate and butadiene as a dispersion aid in a processing aid composition useful in vinyl chloride polymer compositions.

2. A processing aid composition comprising a blend of (a) at least one copolymer of methvl methacrylate and, in an amount of less than 50% by weight of the copolymer, $(C_1-C_4)$-alkyl acrylate(s) and (b) a dispersion aid for component (a) comprising at least one homopolymer and/or copolymer containing at least 50% by weight of units of one or more of the following monomers: $(C_1-C_8)$-alkyl acrylates, $(C_1-C_9)$-cycloalkvl acrylates, ethylene, propylene, vinyl acetate and butadiene; wherein the weight ratio of (a):(b) is 99.5:0.5 to 90:10.

3. Composition as claimed in claim 2 wherein the weight ratio of (a):(b) is 99:1 to 95:5.

4. Composition as claimed in claim 2 or 3 wherein component (b) comprises at least one of the following polymers:
poly(butyl acrylate), poly(ethyl acrylate), polybutadiene, poly(ethyl acrylate/styrene), poly(butyl acrylate/styrene), poly(butyl acrylate/methyl methacrylate), poly(ethyl acrylate/butyl methacrylate), poly-(butadiene/styrene), poly(butyl acrylate/styrene/methylmethacrylate) with the proviso that the methacrylate and/or styrene content is less than 50% by weight in each case or poly(vinyl acetate) or poly(ethylene/vinyl acetate).

5. Composition as claimed in any of claims 2 to 4 wherein the molecular weight of component (b) is 15,000 to 100,000 weight average.

6. A composition as claimed in claim 4 or 5 wherein component (b) comprises polyl(butyl acrylate), poly-(ethyl acrylate) or poly(butyl acrylate/styrene).

7. A composition as claimed in any of claims 2 to 6 wherein component (b) is crosslinked and/or graft linked preferably to a maximum content of 5% by weight crosslinker or graft-linker units.

8. A composition as claimed in any of claims 2 to 7 wherein component (a) comprises poly(ethyl acrylate).

9. A process for preparing a composition as claimed in any of claims 2 to 8 comprising intimately mixing components (a) and (b).

10. A process as claimed in claim 9 wherein component (b) is formed as a latex by emulsion polymerisation in the presence of component (a) as a latex polymer.

11. A process as claimed in claim 9 wherein separate emulsions of components (a) and (b) are prepared and then intimately mixed.

12. A process as claimed in claim 10 or 11 including the further step of coisolating the mixed components, preferably by spray drying or coagulation.

13. A vinyl chloride polymer composition comprising (i) polymer(s) and/or copolymer(s) of vinyl chloride containing at most 50% by weight of other monomer units and (ii) a processing aid composition as claimed in any of claims 2 to 8, the weight ratio of (i) to (ii) preferably being 90:10 to 99.5:0.5.

14. A polymer composition as claimed in claim 13 wherein the processing aid composition has been prepared by a process as claimed in any of claims 9 to 12.

15. A polymer composition as claimed in claim 13 or 14 wherein component (i) comprises poly(vinyl chloride).

**Patentansprüche**

1. Verwendung von mindestens einem Homopolymer und/oder Copolymer, enthaltend mindestens 50 Gew.-% Einheiten von ein oder mehreren der folgenden Monomere: $(C_1-C_8)$-Alkylacrylate, $(C_1-C_9)$-

Cycloalkylacrylate, Ethylen, Propylen, Vinylacetat und Butadien als Dispersionshilfe in einer in Vinylchlorid-Polymerzusammensetzungen verwendbaren Herstellungshilfszusammensetzung.

2. Herstellungshilfszusammensetzung, umfassend ein Gemisch von (a) mindestens einem Copolymer von Methylmethacrylat und, in einer Menge von weniger als 50 Gew.-% des Copoylmers, $(C_1-C_4)$-Alkylacrylat(e) und (b) einer Dispersionshilfe für Komponente (a), umfassend mindestens ein Homopolymer und/oder Copolymer, enthaltend mindestens 50 Gew.-% Einheiten von ein oder mehreren der folgenden Monomere: $(C_1-C_8)$-Alkylacrylate, $(C_1-C_9)$-Cycloalkylacrylate, Ethylen, Propylen, Vinylacetat und Butadien, worin das Gewichtsverhältnis von (a) : (b) 99,5 : 0,5 bis 90 : 10 ist.

3. Zusammensetzung nach Anspruch 2, worin das Gewichtsverhältnis von (a) : (b) 99 : 1 bis 95 : 5 ist.

4. Zusammensetzung nach Anspruch 2 oder 3, worin die Komponente (b) mindestens eines der folgenden Polymere:
Poly(butylacrylat), Poly(ethylacrylat), Polybutadien, Poly(ethylacrylat/styrol), Poly(butylucrylat/styrol), Poly(butylacrylat/methylmethacrylat), Poly(ethylacrylat/ butylmethacrylat), Poly(butadien/styrol), Poly-(butylacrylat/styrol/methylmethacrylat) mit der Maßgabe,
daß der Methacrylat- und/oder Styrolgehalt weniger als 50 Gew.-% in jedem Fall umfaßt, oder Poly-(vinylacetat) oder Poly(ethylen/vinylacetat) ist.

5. Zusammensetzung nach einem der Ansprüche 2 bis 4, worin das Molekulargewicht der Komponente (b) ein Durchschnittsgewicht von 15 000 bis 100 000 hat.

6. Zusammensetzung nach Anspruch 4 oder 5, worin die Komponente (b) Poly(butylacrylat), Poly-(ethylacrylat) oder Poly(butylacrylat/styrol) umfaßt.

7. Zusammensetzung nach einem der Ansprüche 2 bis 6, worin die Komponente (b) quervernetzt und/oder pfropfvernetzt ist, vorzugsweise bis zu einem Maximalgehalt von 5 Gew.-% Quervernetzungs- oder Pfropfvernetzungseinheiten.

8. Zusammensetzung nach einem der Ansprüche 2 bis 7, worin die Komponente (a) Poly(ethylacrylat) umfaßt.

9. Verfahren zur Herstellung einer Zusammensetzung nach einem der Ansprüche 2 bis 8, umfassend die enge Vermischung der Komponenten (a) und (b).

10. Verfahren nach Anspruch 9, worin die Komponente (b) als Latex durch Emulsionspolymerisation in Gegenwart der Komponente (a) als Latexpolymer ausgebildet wird.

11. Verfahren nach Anspruch 9, worin getrennte Emulsionen dar Komponenten (a) und (b) hergestellt und dann eng miteinander vermischt werden.

12. Verfahren nach Anspruch 10 oder 11, einschließlich des weiteren Schrittes der Koisolierung der gemischten Komponenten, vorzugsweise durch Sprühtrocknung oder Koagulation.

13. Vinylchlorid-Polymerzusammensetzung, umfassend (i) Polymer(e) und/oder Copolymer(e) von Vinylchlorid, enthaltend mindestens 50 Gew.-% weiterer Monomereinheiten und (ii) eine Harstellungshilfszusammensetzung nach einem der Ansprüche 2 - 8, wobei das Gewichtsverhältnis von (i) zu (ii) vorzugsweise 90 : 10 bis 99,5 : 0,5 ist.

14. Polymerzusammensetzung nach Anspruch 13, worin die Herstellungshilfszusammensetzung durch ein Verfahren nach einem der Ansprüche 9 - 12 hergestellt worden ist.

15. Polymerzusammensetzung nach Anspruch 13 oder 14, worin die Komponente (i) Poly(vinylchlorid) umfaßt.

**Revendications**

1. Utilisation d'au moins un homopolymère et/ou copolymère contenant au moins 50 % en poids de motifs d'un ou plusieurs des monomères suivants : des acrylates d'alkyles en $C_1$ à $C_8$ , des acrylates de cycloalkyles en $C_1$ à $C_9$, l'éthylène , le propylène , l'acétate de vinyle et le butadiène comme adjuvant de dispersion dans une composition d'adjuvant de traitement utile dans des compositions de polymères du chlorure de vinyle .

2. Composition d'adjuvant de traitement comprenant un mélange de (a) au moins un copolymère de méthacrylate de méthyle et,en une quantité inférieure à 50 % en poids du copolymère un ou des acrylate(s) d'alkyle(s) en $C_1$ à $C_4$ , et de (b) un adjuvant de dispersion du composant (a) comprenant au moins un homopolymère et/ou copolymère contenant au moins 50 % en poids de motifs d'un ou plusieurs des monomères suivants : des acrylates d'alkyles en $C_1$ à $C_8$ , des acrylates de cycloalkyles en $C_1$ à $C_9$ l'éthylène , le propylène , l'acétate de vinyle et le butadiène ,composition dans laquelle le rapport pondéral de (a):(b) vaut de 99,5:0,5 à 90:10 .

3. Composition telle que revendiquée à la revendication 2 , dans laquelle le rapport pondéral de (a):(b) vaut de 99:1 à 95:5 .

4. Composition telle que revendiquée dans la revendication 2 ou 3 , dans laquelle le composant (b) comprend au moins un des polymères suivants :
   le poly(acrylate de butyle) ,le poly(acrylate d'éthyle) , le polybutadiène , le poly(acrylate d'éthyle/styrène) , le poly(acrylate de butyle/styrène) , le poly (acrylate de butyle/méthacrylate de méthyle, le poly(acrylate d'éthyle/méthacrylate de butyle), le poly(butadiène/styrène), le poly( acrylate de butyle/styrène/méthacrylate de méthyle) à la condition que la teneur en méthacrylate et/ou en styrène soit inférieure à 50 % en poids dans chaque cas,ou du poly(acétate de vinyle) ou du poly-(éthylène/acétate de vinyle) .

5. Composition telle que revendiquée dans l'une quelconque des revendications 2 à 4 , dans laquelle le poids moléculaire du composant (b) a une valeur moyenne en poids de 15 000 à 100 000.

6. Composition telle que revendiquée à la revendication 4 ou 5 , dans laquelle le composant (b) comprend du poly(acrylate de butyle) , du poly(acrylate d'éthyle) ou du poly(acrylate de butyle/styrène) .

7. Composition telle que revendiquée dans l'une quelconque des revendications 2 à 6 , dans laquelle le composant (b) est réticulé et/ou greffé, de préférence jusqu'à une teneur maximale de 5 % en poids d'agent de réticulation ou de greffage.

8. Composition telle que revendiquée dans l'une quelconque des revendications 2 à 7 , dans laquelle le composant (a) comprend du poly(acrylate d'éthyle).

9. Procédé pour préparer une composition telle que revendiquée dans l'une quelconque des revendications 2 à 8 ,comprenant le mélange intime des composants (a) et (b) .

10. Procédé tel que revendiqué à la revendication 9 , dans lequel le composant (b) est formé sous forme d'un latex par polymérisation en émulsion en présence du composant (a) sous forme d'un polymère en latex .

11. Procédé tel que revendiqué à la revendication 9 , dans lequel on prépare des émulsions séparées des composants (a) et (b) ,puis on les mélange intimément .

12. Procédé tel que revendiqué à la revendication 10 ou 11, comprenant l'étape supplémentaireconsistant à co-isoler les composants mélangés , de préférence par séchage par atomisation ou par coagulation .

13. Composition de polymère de chlorure de vinyle, comprenant (i) un ou des polymère(s) et/ou copolymère(s) de chlorure de vinyle, contenant au maximum 50 % en poids d'autres motifs monomères,et (ii) une composition d'adjuvant de traitement telle que revendiquée dans l'une quelconque des revendications 2 à 8 , le rapport pondéral de (i) à (ii) étant de préférence de 90:10 à 99,5:0,5 .

**14.** Composition de polymère telle que revendiquée à la revendication 13 , dans laquelle la composition d'adjuvant de traitement a été préparée par un procédé tel que revendiqué dans l'une quelconque des revendications 9 à 12 .

**15.** Composition de polymère, telle que revendiquée à la revendication 13 ou 14, dans laquelle le composant (i) est ou comprend du poly ( chlorure de vinyle) .